# EUROPEAN PATENT APPLICATION

(11) **EP 4 610 925 A1**
(43) Date of publication of application: **03.09.2025**
(21) Application number: 23887509.0
(22) Date of filing: 30.06.2023
(51) Int. Cl.: G06T 7/00

(54) **IMAGE ANOMALY DETECTION METHOD AND APPARATUS, DEVICE, AND STORAGE MEDIUM**

(30) Priority: 09.11.2022 CN 202211399390
(71) Applicant: Huawei Technologies Co., Ltd., Shenzhen, Guangdong 518129 (CN)
(72) Inventor: WANG, Yaoyuan, Shenzhen, Guangdong 518129 (CN); LUO, Wentao, Shenzhen, Guangdong 518129 (CN); LI, Jiawei, Shenzhen, Guangdong 518129 (CN); ZHANG, Ziyang, Shenzhen, Guangdong 518129 (CN); HE, Weihua, Shenzhen, Guangdong 518129 (CN); TIAN, Yang, Shenzhen, Guangdong 518129 (CN); LOU, Yihang, Shenzhen, Guangdong 518129 (CN); ZHANG, Jingyi, Shenzhen, Guangdong 518129 (CN)
(74) Representative: Körber, Martin Hans
(86) International application number: PCT/CN2023/105159
(87) International publication number: WO 2024/098813

(57) **Abstract**

This application relates to the field of artificial intelligence technologies, and provides an image anomaly detection method and apparatus, a device, and a storage medium. The method includes: restoring predicted distributions of N images to obtain N restored images, where the N images include a to-be-detected image and/or an image obtained by scaling the to-be-detected image; and obtaining an abnormal pixel of the to-be-detected image based on N comparison results of the N restored images and N images obtained by restoring target distributions. According to the method in this application, the abnormal pixel of the to-be-detected image can be obtained, and pixel-level detection is realized, so that a detection capability can be improved.

## Description

This application claims priority to Chinese Patent Application No. 202211399390.5, filed on November 9, 2022 and entitled "IMAGE ANOMALY DETECTION METHOD AND APPARATUS, DEVICE, AND STORAGE MEDIUM", which is incorporated by reference in its entirety.

### TECHNICAL FIELD

This application relates to the field of artificial intelligence technologies, and in particular, to an image anomaly detection method and apparatus, a device, and a storage medium.

### BACKGROUND

In the detection field, to determine anomaly content, a neural network model is usually used for anomaly detection. For example, in an industrial scenario, the neural network model is usually used for quality detection on a part during machining and assembly or on an assembled part, to find and mark a position and an extent of a defect, so as to provide reference information for optimization and improvement during manufacturing.

Currently, a supervised learning algorithm is a common algorithm for anomaly detection. A trained neural network model is obtained by learning from labeling information of a large quantity of negative samples through the supervised learning algorithm. The neural network model is then used for anomaly detection, to obtain a rectangular boundary box of the anomaly content. For example, the neural network model uses a you only look once (you only look once, YOLO) algorithm. The YOLO algorithm is used to predict each rectangular boundary box and a category of each rectangular boundary box by using a feature of a to-be-detected image. Specifically, the to-be-detected image is divided into S*S grids. If a center of an object is in a grid, the grid is responsible for prediction of the object. Each grid is input into the trained neural network model, and position information, corresponding confidence, and category information of a rectangular boundary box are output. A rectangular boundary box with confidence less than a preset threshold is deleted, and a redundant rectangular boundary box is further removed by using a non-maximum suppression algorithm. In this way, a remaining rectangular boundary box is a rectangular boundary box obtained through prediction.

However, the YOLO algorithm can be used to detect anomaly content only at a rectangular level, and cannot be used to detect anomaly content at a non-rectangular level, resulting in a low detection capability.

### SUMMARY

This application provides an image anomaly detection method and apparatus, a device, and a storage medium, so that a pixel-level anomaly can be detected, and a detection capability is strong.

According to a first aspect, this application provides an image anomaly detection method. The method includes: restoring predicted distributions of N images to obtain N restored images, where the N images include a to-be-detected image and/or an image obtained by scaling the to-be-detected image, a restored image corresponding to a first image in the N images has a same size as the first image, and N is a positive integer; and obtaining an abnormal pixel of the to-be-detected image based on N comparison results of the N restored images and N second images, where the N restored images are in one-to-one correspondence with the N second images, sizes of the N restored images are the same as sizes of the corresponding second images, the second image is an image obtained by restoring a target distribution, and the target distribution is a distribution followed by a positive sample image in a domain to which the to-be-detected image belongs.

In solutions of this application, the to-be-detected image and/or the image obtained by scaling the to-be-detected image form/forms the N images, the N restored images are obtained by restoring the predicted distributions of the N images, and the abnormal pixel of the to-be-detected image is obtained by using the comparison results of the N restored images and the N images obtained by restoring the target distributions. The target distribution is the distribution followed by the positive sample image in the domain to which the to-be-detected image belongs. Because comparison between the N restored images and the images obtained by restoring the distributions followed by positive sample images is comparison between images, a pixel-level anomaly can be detected, and a detection capability is strong.

In an optional manner, the method further includes: obtaining the predicted distributions of the N images by using the N images and a first flow model.

In an optional manner, when the predicted distributions of the N images are obtained by using the N images and the first flow model, features of the N images may be first extracted, and the features of the N images are input into the first flow model, to obtain the predicted distributions of the N images.

In an optional manner, N is a positive integer greater than 1, and a predicted distribution of the first image is generated by the first flow model based on a fused feature corresponding to the first image, where the fused feature corresponding to the first image is obtained by fusing a feature of the first image and a feature of at least one image other than the first image in the N images. In this way, images of different sizes reflect content of different granularities, and features of images of a plurality of sizes are fused, so that a predicted distribution of an image of each size reflects features of a plurality of granularities, and the obtained predicted distribution can be more accurate.

In an optional manner, N is a positive integer greater than 1, and the method further includes: For the first image in the N images, the first image and at least one another image in the N images may be fused, to obtain a fused image corresponding to the first image, and a predicted distribution of the first image is obtained based on the fused image. Because images of different sizes reflect content of different granularities, features of images of a plurality of sizes are fused, so that a predicted distribution of an image of each size reflects content of a plurality of granularities, and the obtained predicted distribution can be more accurate.

In an optional manner, the restoring predicted distributions of N images to obtain N restored images includes: inputting the predicted distributions of the N images into a second flow model to obtain the N restored images, where the second flow model is a reverse flow model. In this way, the restored images can be obtained by using the reverse flow model.

In an optional manner, when the abnormal pixel of the to-be-detected image is obtained by using the N comparison results, pixel distances between the N restored images and the N images obtained by restoring the target distributions may be determined, anomaly scores corresponding to pixels of the to-be-detected image are determined by using the pixel distances, and a pixel whose anomaly score is greater than an anomaly score mean in the to-be-detected image is determined as the abnormal pixel of the to-be-detected image, so that pixel-level anomaly detection can be implemented.

In an optional manner, a size of the image obtained by scaling the to-be-detected image is smaller than a size of the to-be-detected image. In this way, a fine-grained feature can be identified, to improve anomaly detection precision.

In an optional manner, the first flow model is obtained through training with a training objective of constraining a distribution of at least one positive sample image to the target distribution.

In an optional manner, the method further includes: scaling a target positive sample image in the at least one positive sample image, to obtain positive sample images of M sizes of the target positive sample image, and extracting features of the positive sample images of the M sizes and a feature of the target positive sample image, where M is a positive integer; inputting the features of the positive sample images of the M sizes and the feature of the target positive sample image into an initial flow model, to obtain a predicted distribution of a positive sample image of each size; and updating the initial flow model with an objective of constraining the predicted distribution of the positive sample image of each size to the target distribution, until the first flow model is obtained. In this way, the flow model is updated with the objective of constraining the predicted distribution of the positive sample image to the target distribution.

According to a second aspect, this application provides an image anomaly detection apparatus. The apparatus includes at least one module, and the at least one module is configured to implement the image anomaly detection method provided in the first aspect or any one of the optional manners of the first aspect.

According to a third aspect, this application provides a computing device. The computing device includes a processor and a memory, the memory stores computer instructions, and the processor is configured to execute the computer instructions, so that the computing device performs the image anomaly detection method provided in the first aspect or any one of the optional manners of the first aspect.

According to a fourth aspect, this application provides a computer-readable storage medium. The storage medium stores at least one computer instruction, and the computer instruction is read by a processor, so that a computing device performs the image anomaly detection method provided in the first aspect or any one of the optional manners of the first aspect.

According to a fifth aspect, this application provides a computer program product. The computer program product includes computer instructions, and the computer instructions are stored in a computer-readable storage medium. A processor of a computing device reads the computer instructions from the computer-readable storage medium, and the processor executes the computer instructions, so that the computing device performs the image anomaly detection method provided in the first aspect or any one of the optional manners of the first aspect.

### BRIEF DESCRIPTION OF DRAWINGS

FIG. 1 is a diagram of a system architecture according to an example embodiment of this application;
FIG. 2 is a diagram of a system architecture according to an example embodiment of this application;
FIG. 3 is a diagram of a structure of a device according to an example embodiment of this application;
FIG. 4 is a schematic flowchart of an image anomaly detection method according to an example embodiment of this application;
FIG. 5 is a diagram of a procedure framework for determining an abnormal pixel according to an example embodiment of this application;
FIG. 6 is a diagram of scaling a to-be-detected image according to an example embodiment of this application;
FIG. 7 is a diagram of feature fusion according to an example embodiment of this application;
FIG. 8 is a diagram of a framework for determining a predicted distribution of an image according to an example embodiment of this application;
FIG. 9 is a diagram of a framework for determining a restored image according to an example embodiment of this application;
FIG. 10 is a diagram of a framework of a first flow model according to an example embodiment of this application;
FIG. 11 is a schematic flowchart of training a first flow model according to an example embodiment of this application; and
FIG. 12 is a diagram of a structure of an image anomaly detection apparatus according to an example embodiment of this application.

### DESCRIPTION OF EMBODIMENTS

To make the objectives, technical solutions, and advantages of this application clearer, the following further describes the implementations of this application in detail with reference to the accompanying drawings.

In the detection field, to determine anomaly content, a neural network model is usually used for anomaly detection. For example, in an industrial scenario, the neural network model is usually used for quality detection on a part during machining and assembly or on an assembled part, to find and mark a position and an extent of a defect, so as to provide reference information for optimization and improvement during manufacturing.

In a conventional technology, a YOLO algorithm in a supervised learning algorithm is commonly used for anomaly detection. The YOLO algorithm is used to predict each rectangular boundary box and a category of each rectangular boundary box by using a feature of a to-be-detected image. Specifically, the to-be-detected image is divided into S*S grids. If a center of an object is in a grid, the grid is responsible for prediction of the object. Each grid is input into the trained neural network model, and position information, corresponding confidence, and category information of a rectangular boundary box are output. A rectangular boundary box with confidence less than a preset threshold is deleted, and a redundant rectangular boundary box is further removed by using a non-maximum suppression algorithm. In this way, a remaining rectangular boundary box is a rectangular boundary box obtained through prediction. However, the YOLO algorithm can be used to detect anomaly content only at a rectangular level, and cannot be used to detect anomaly content at a non-rectangular level, resulting in a low detection capability.

In view of this, in embodiments of this application, a to-be-detected image and/or an image obtained by scaling the to-be-detected image form/forms N images, N restored images are obtained by restoring predicted distributions of the N images, and an abnormal pixel of the to-be-detected image is obtained by using comparison results of the N restored images and N images obtained by restoring target distributions. The target distribution is a distribution followed by a positive sample image in a domain to which the to-be-detected image belongs. Because comparison between the N restored images and the images obtained by restoring the distributions followed by positive sample images is comparison between images, a pixel-level anomaly can be detected, so that an anomaly of any shape can be detected, and a detection capability is strong.

The following specifically describes the technical solutions provided in embodiments of this application from a plurality of perspectives in a sequence of application scenarios, system architectures, a hardware structure of a device in a system architecture, and a procedure of an image anomaly detection method.

The following describes the application scenarios.

Application scenario 1 is an industrial anomaly detection scenario. In this scenario, quality detection is performed on a part, a workpiece, and a product during or after machining or assembly, and a position and an extent of a defect are identified and marked, to provide important reference information for optimization and improvement during manufacturing.

In the industrial anomaly detection scenario, industrial anomaly detection software may be developed. The industrial anomaly detection software may be used as a part of a quality management software system. For example, the industrial anomaly detection software is integrated into the quality management software system. During machining or assembly, the industrial anomaly detection software may obtain a to-be-detected image (where the to-be-detected image includes a machining part or the like) from a visual sensor in real time, to detect an abnormal pixel. Alternatively, after machining or assembly, the industrial anomaly detection software receives a collected to-be-detected image, to detect an abnormal pixel.

The industrial anomaly detection software may be deployed on a visualization hardware device, and the visualization hardware device may be an industrial computer, a display having a remote connection to a cloud, or the like. The industrial anomaly detection software may alternatively be deployed on an industrial device, and the industrial device may be a device such as a machining machine tool or a numerical control center. The industrial anomaly detection software may alternatively be deployed on a server, a terminal device, or the like.

Application scenario 2 is a scenario of determining a lesion position in the field of medical images. In this scenario, a lesion position in an image such as an X-ray image or a B-mode ultrasound image is detected.

In the scenario of determining a lesion position, lesion position detection software may be developed. After the X-ray image or the B-mode ultrasound image is obtained, the image is input into the lesion position detection software to perform pixel-level detection of the lesion position. The lesion position detection software may be deployed on a server, a terminal device, or the like.

The foregoing are examples of the application scenarios in embodiments of this application. However, all image anomaly detection can be applied to embodiments of this application. This is not limited in embodiments of this application.

The following describes the system architectures.

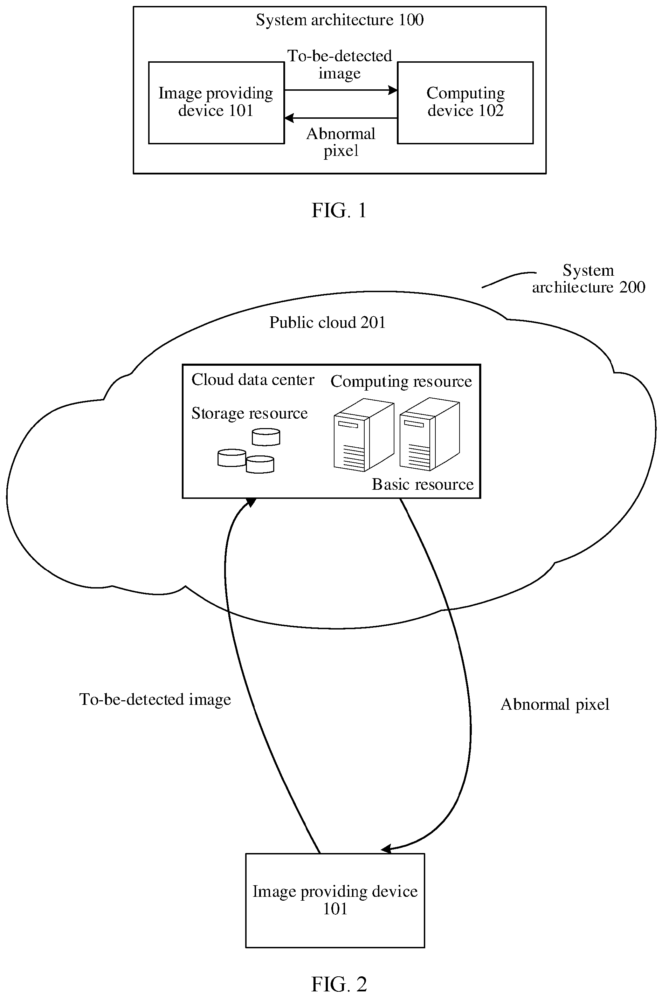

In an optional manner, an embodiment of this application provides a system architecture 100. As shown in FIG. 1, the system architecture 100 includes an image providing device 101 and a computing device 102. The image providing device 101 is connected to the computing device 102 through a wired or wireless network. The image providing device 101 can provide a to-be-detected image for the computing device 102. The computing device 102 is configured to detect an abnormal pixel of the to-be-detected image, or the like. For example, in an industrial anomaly detection scenario, the image providing device 101 may be a visual sensor, or the like, and the computing device 102 may be a visual hardware device, an industrial device, or the like. In a scenario of determining a lesion position, the image providing device 101 may be a device for photographing an X-ray image or a B-mode ultrasound image, and the computing device 102 may be a server, a terminal device, or the like.

In another optional manner, an embodiment of this application provides another system architecture 200. As shown in FIG. 2, the system architecture 200 includes an image providing device 101 and a public cloud 201. The image providing device 101 is connected to the public cloud 201 through a wired or wireless network. The public cloud 201 is an entity that provides a cloud service for a user by using a basic resource in a cloud computing mode, and the public cloud 201 may also be considered as a cloud environment. The public cloud 201 includes a cloud data center. The cloud data center includes a large quantity of basic resources owned by a cloud service provider. The basic resources of the large quantity include computing resources, storage resources, and network resources. The computing resources included in the cloud data center may be a computing device cluster. The computing device cluster includes at least one computing device 102. The computing device 102 may be a server, a terminal device, or the like. When the user uses the cloud service, the user may input a to-be-detected image to the public cloud 201 or the like through an application programming interface (application programming interface, API) or an interaction interface (where the interaction interface may be a graphical user interface (graphical user interface, GUI)) provided by the image providing device 101. The computing device cluster in the public cloud 201 receives the to-be-detected image input by the user, performs anomaly detection on the to-be-detected image, to obtain an abnormal pixel of the to-be-detected image, and returns the abnormal pixel of the to-be-detected image to the image providing device 101.

In the system architecture 200, an image anomaly detection method may be abstracted by the cloud service provider into a cloud service in the public cloud 201 and provided for the user. After obtaining permission to use the cloud service, the user may perform anomaly detection on the to-be-detected images by using the cloud service.

In still another optional manner, an embodiment of this application further provides a system architecture. The system architecture includes a computing device 102. The computing device 102 obtains a to-be-detected image, and performs anomaly detection on the to-be-detected image.

The following describes the hardware structure of the device in the system architecture.

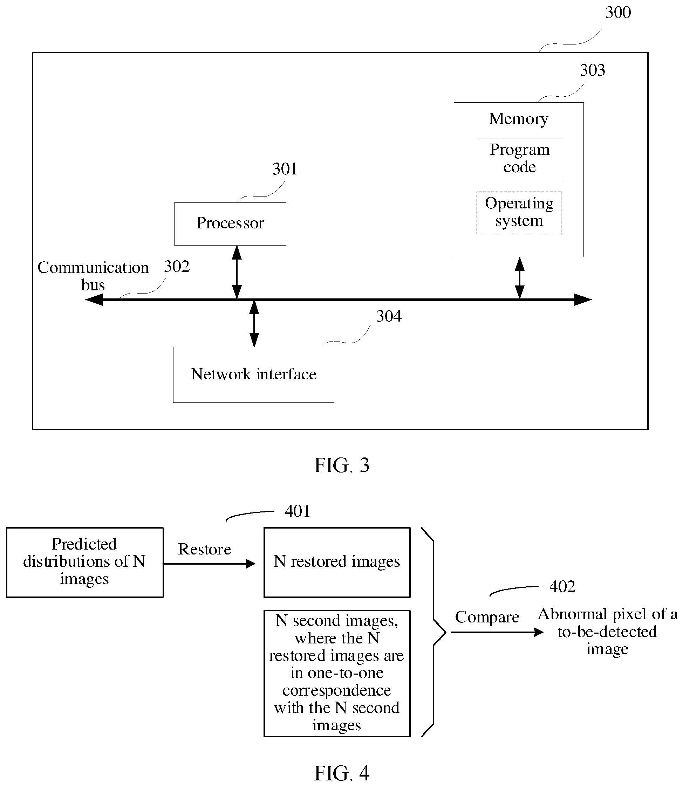

Refer to FIG. 3. A device 300 shown in FIG. 3 is an example of a hardware structure of a device in the system architecture. For example, the device 300 is a server.

The device 300 is optionally implemented by using a general bus architecture. The device 300 includes at least one processor 301, a communication bus 302, a memory 303, and at least one network interface 304.

The processor 301 is, for example, a general-purpose central processing unit (central processing unit, CPU), a network processor (network processor, NP), a GPU, an NPU, a data processing unit (data processing unit, DPU), a microprocessor, or one or more integrated circuits configured to implement the solutions of this application. For example, the processor 301 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), generic array logic (generic array logic, GAL), or any combination thereof.

The communication bus 302 is configured to transmit information between the foregoing components. The communication bus 302 may be classified into an address bus, a data bus, a control bus, and the like. For ease of representation, only one thick line is used to represent the bus in FIG. 3, but this does not mean that there is only one bus or only one type of bus.

The memory 303 is, for example, a read-only memory (read-only memory, ROM) or another type of static storage device that can store static information and instructions, or is, for another example, a random access memory (random access memory, RAM) or another type of dynamic storage device that can store information and instructions, or is, for another example, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. For example, the memory 303 exists independently, and is connected to the processor 301 through the communication bus 302. The memory 303 may alternatively be integrated with the processor 301.

Optionally, the memory 303 is configured to store data obtained by the device 300 during image anomaly detection, or the like.

The network interface 304 uses any apparatus of a transceiver type to communicate with another device or a communication network. The network interface 304 includes a wired network interface, or may include a wireless network interface. The wired network interface may be, for example, an Ethernet interface. The Ethernet interface may be an optical interface, an electrical interface, or a combination thereof. The wireless network interface may be a wireless local area network (wireless local area network, WLAN) interface, a network interface of a cellular network, a combination thereof, or the like.

During specific implementation, in an embodiment, the processor 301 may include one or more CPUs.

During specific implementation, in an embodiment, the device 300 may include a plurality of processors. Each of the processors may be a single-core processor (single-CPU), or may be a multicore processor (multi-CPU). The processor herein may be one or more devices, circuits, and/or processing cores configured to process data (for example, computer program instructions).

In some embodiments, the memory 303 is configured to store program code for executing the solutions in this application, and the processor 301 may execute the program code stored in the memory 303. In other words, the device 300 may implement the image anomaly detection method provided in the method embodiments via the processor 301 and the program code in the memory 303.

The following describes a procedure of an image anomaly detection method according to an embodiment of this application.

FIG. 4 provides a procedure of an image anomaly detection method. Refer to step 401 and step 402. In FIG. 4, the procedure of the anomaly detection method is described with the foregoing computing device as an execution entity.

Step 401: Restore predicted distributions of N images to obtain N restored images, where the N images include a to-be-detected image and/or an image obtained by scaling the to-be-detected image, a restored image corresponding to a first image in the N images has a same size as the first image, and N is a positive integer.

The to-be-detected image is any image on which anomaly detection is performed. A size of the to-be-detected image is the same as a size of a positive sample image.

In this embodiment, the to-be-detected image and/or the image obtained by scaling the to-be-detected image form/forms the N images, where N is a positive integer. To be specific, the N images include the to-be-detected image, or the N images include the image obtained by scaling the to-be-detected image, or the N images include the to-be-detected image and the image obtained by scaling the to-be-detected image. When N is 1, the N images include the to-be-detected image, or the N images include one image obtained by scaling the to-be-detected image. When N is greater than 1, the N images include the to-be-detected image and at least one image obtained by scaling the to-be-detected image, or the N images include a plurality of images obtained by scaling the to-be-detected image. When a plurality of images are obtained by scaling the to-be-detected image, the plurality of images are of different sizes, and the to-be-detected image and the plurality of images are of different sizes.

The computing device obtains the predicted distributions of the N images. Each image corresponds to one predicted distribution, the predicted distributions of the N images may be obtained based on a first flow model, and the predicted distributions may be represented by using a matrix. The first flow model is a distribution generation model trained in advance, and the first flow model may implement reversible data conversion by constructing a neural network equivalent to a Jacobian matrix.

The computing device obtains a second flow model trained in advance. The second flow model is a reverse flow model, to be specific, an input of the second flow model is a distribution, and an output of the second flow model is an image. The computing device restores the predicted distributions of the N images by using the second flow model, to obtain the N restored images, where a predicted distribution of each image is restored to obtain one restored image, the restored image corresponding to the first image in the N images has the same size as the first image, and the first image is any image in the N images.

In an optional manner, the second flow model is a reverse flow model of the first flow model. In this way, after the first flow model is trained, the reverse flow model of the first flow model is determined as the second flow model, so that a training resource can be saved.

In another optional manner, the second flow model is obtained through separate training.

Step 402: Obtain an abnormal pixel of the to-be-detected image based on N comparison results of the N restored images and N second images, where the N restored images are in one-to-one correspondence with the N second images, sizes of the N restored images are the same as sizes of the corresponding second images, the second image is an image obtained by restoring a target distribution, and the target distribution is a distribution followed by a positive sample image in a domain to which the to-be-detected image belongs.

In this embodiment, the computing device obtains the N stored second images. Alternatively, the computing device obtains N target distributions, where the N target distributions are in one-to-one correspondence with the sizes of the N restored images; and the computing device restores the N target distributions by using the second flow model to obtain the N second images, where the N restored images are in one-to-one correspondence with the N second images, and the sizes of the N restored images are the same as the sizes of the corresponding second images. For example, a second image corresponding to a restored image of size A is also of size A. The target distribution is the distribution followed by the positive sample image in the domain to which the to-be-detected image belongs. For example, if the to-be-detected image is an image of a part A, the positive sample image is an image of a defect-free part A. The target distribution may be a continuous probability distribution such as a Gaussian distribution, a Poisson distribution, or an exponential distribution, and the target distribution may be represented by using a matrix.

When N is 1, the N restored images are one restored image, and the N second images are one second image. The computing device compares the restored image with the second image to obtain a comparison result, and the computing device obtains an abnormal pixel of the to-be-detected image by using the comparison result. For example, the restored image and the second image are of a same size, and the computing device calculates pixel distances between corresponding pixels of the restored image and the second image. When the restored image and the second image are of size M0*N0, the pixel distances form an M0*N0 matrix based on pixel positions. The pixel distance may be a Euclidean distance or a Manhattan distance. If the restored image and the to-be-detected image are of a same size, a pixel distance between pixels at position (i, j) in the M0*N0 matrix is determined as an anomaly score of the pixels at position (i, j) in the to-be-detected image. If the restored image and the to-be-detected image are of different sizes, the M0*N0 matrix is processed to obtain a matrix with a same size as the to-be-detected image; and in the matrix, a pixel distance between pixels at position (i, j) is determined as an anomaly score of the pixels at position (i, j) in the to-be-detected image. Then, the computing device calculates a mean of anomaly scores of all pixels in the to-be-detected image, and determines a pixel with an anomaly score greater than the mean in the to-be-detected image as the abnormal pixel of the to-be-detected image. Before the pixel distance between the pixels at position (i, j) is determined as the anomaly score of the pixels at position (i, j) in the to-be-detected image, normalization may be further performed on the pixel distance, and a normalized pixel distance between the pixels at position (i, j) is determined as the anomaly score of the pixels at position (i, j) in the to-be-detected image.

When N is greater than 1, the N restored images are of different sizes, and the N second images are also of different sizes. For ease of description, an example in which N is 2 is used herein for description. Sizes of two restored images are M1*N1 and M2*N2. Correspondingly, sizes of two second images are M1*N1 and M2*N2. The computing device calculates pixel distances between corresponding pixels of the M1*N1 restored image and the M1*N1 second image. In this way, M1*N1 pixel distances may be obtained, and the M1*N1 pixel distances form an M1*N1 matrix based on pixel positions. The computing device calculates pixel distances between corresponding pixels of the M2*N2 restored image and the M2*N2 second image. In this way, M2*N2 pixel distances may be obtained, and the M2*N2 pixel distances form an M2*N2 matrix based on pixel positions.

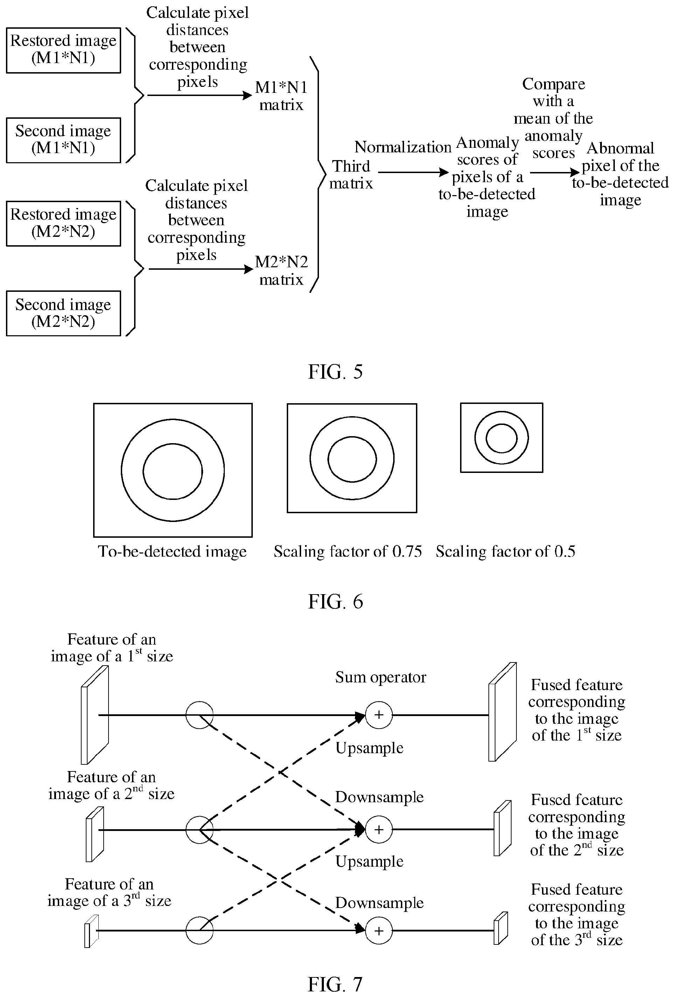

If neither M1*N1 nor M2*N2 is not the size of the to-be-detected image, the M1*N1 matrix is processed as follows: The M1*N1 matrix is restored to a first matrix of a size M3*N3, where M3*N3 is the size of the to-be-detected image, and the M2*N2 matrix is processed as follows: The M2*N2 matrix is restored to a second matrix of the size M3*N3. Elements in corresponding positions in the first matrix and the second matrix are added to obtain a third matrix of M3 *N3. Refer to FIG. 5.

If M1*N1 is the size of the to-be-detected image, and M2*N2 is not the size of the to-be-detected image, the M1*N1 matrix is an M3*N3 matrix, and the M2*N2 matrix is processed as follows: The M2*N2 matrix is restored to a fourth matrix of the size M3*N3. Elements in corresponding positions in the M3*N3 matrix and the fourth matrix are added to obtain a third matrix of M3*N3.

The computing device performs normalization on the third matrix of M3*N3, and determines that an element value at position (i, j) in a normalized third matrix is an anomaly score of a pixel at position (i, j) in the to-be-detected image. In this way, anomaly scores of all pixels in the to-be-detected image form an anomaly score matrix of the to-be-detected image. The computing device calculates a mean (namely, a target mean) of all elements in the anomaly score matrix, and determines a pixel corresponding to an element whose element value is greater than the target mean in the anomaly score matrix as an abnormal pixel.

Optionally, when M1*N1 is larger than the size of the to-be-detected image, downsampling is performed on the M1*N1 matrix; or when M1*N1 is smaller than the size of the to-be-detected image, upsampling is performed on the M1*N1 matrix. Manners of downsampling and upsampling are not limited in embodiments of this application. For example, upsampling may be bilinear interpolation, and downsampling may be convolution. For a manner of processing the M1*N1 matrix, refer to a manner of processing the M2*N2 matrix.

Optionally, any method may be used for normalization. For example, a maximum value and a minimum value in the third matrix are determined. For a target element in the third matrix, the minimum value is subtracted from a value of the target element, and a subtracted value of the target element is then divided by a difference between the maximum value and the minimum value, to obtain a normalized value of the target element.

Optionally, after the anomaly score matrix of the to-be-detected image is obtained, an anomaly score mean of the anomaly score matrix is used as a threshold for abnormal pixel binarization. After normalization, the target mean is 0.5. When an anomaly score of a pixel is greater than 0.5, the pixel is marked as an abnormal pixel, and a pixel value of the pixel is set to 255. When an anomaly score of a pixel is less than or equal to 0.5, the pixel is marked as a normal pixel, and a pixel value of the pixel is set to 0. In this way, a binary pixel-level anomaly detection mask image of the to-be-detected image can be obtained. In the mask image, a pixel with a pixel value of 255 is an abnormal pixel, and a pixel with a pixel value of 0 is a normal pixel.

Optionally, the pixel distance may be a Euclidean distance, a Manhattan distance, or the like.

Optionally, when scaling is performed on the to-be-detected image, a scaling factor is used for scaling the to-be-detected image to obtain at least one image. Scaling is performed on the original to-be-detected image by using the scaling factor, so that a model can identify features of the to-be-detected image with different granularities. For example, when the scaling factor is less than 1, the model can identify a fine-grained feature, to improve anomaly detection precision; or when the scaling factor is greater than 1, the model can identify a coarse-grained feature. Therefore, the scaling factor may be less than 1 or greater than 1. To be specific, sizes of images obtained by scaling the to-be-detected image may be all smaller than the size of the to-be-detected image, or may be all larger than the size of the to-be-detected image, or may include a size smaller than the size of the to-be-detected image and a size larger than the size of the to-be-detected image.

In actual requirements, the scaling factor may be set based on the requirements. For example, refer to FIG. 6. When a coarse-grained feature needs to be identified, the scaling factor may be selected to be less than 1, and the scaling factor is 0.75, 0.5, 0.25, or the like.

In an optional manner, when N is 1, generating a predicted distribution corresponding to an image is performed as follows:
The N images refer to one image. The computing device inputs the image into a feature extraction model, and the feature extraction model outputs a feature of the image. The feature extraction model may be a deep convolutional network trained in advance. The deep convolutional network may be a convolutional network such as an efficientNet (EfficientNet), a wide residual network (wide residual network, WideResNet), a visual geometry group network-16 (visual geometry group network-16, Vgg16), or a visual geometry group network-19 (visual geometry group network-19, Vgg19). The extracted feature is two-dimensional embedded information. For images of different sizes, dimensions of the extracted feature are different. The computing device inputs the feature of the image into the first flow model, to obtain the predicted distribution of the image.

Alternatively, the computing device generates the predicted distribution of the image based on the image and the first flow model. For example, the first flow model has a capability of extracting a feature of an image. The computing device inputs the image into the first flow model, and an output of the first flow model is the predicted distribution of the image.

In an optional manner, when N is greater than 1, predicted distributions corresponding to images are generated as follows:
For a first image in the N images, the computing device fuses the first image and at least one image other than the first image in the N images, to obtain a fused image corresponding to the first image. For example, the computing device inputs the N images separately into the feature extraction model, to obtain features of the N images. It is assumed that the first image is fused with a third image other than the first image in the N images. If a size of the first image is smaller than a size of the third image, downsampling is performed on a feature of the third image, so that a dimension of a downsampled feature of the third image is the same as a dimension of a feature of the first image, and the downsampled feature of the third image is correspondingly added to the feature of the first image, to obtain a fused feature corresponding to the first image. If a size of the first image is larger than a size of the third image, upsampling is performed on a feature of the third image, so that a dimension of an upsampled feature of the third image is the same as a dimension of a feature of the first image, and the upsampled feature of the third image is correspondingly added to the feature of the first image, to obtain a fused feature corresponding to the first image.

Optionally, the third image may be an image with a size adjacent to the size of the first image. For example, when N is greater than or equal to 2, it is assumed that the N images include images of a 1^{st} size to an N^{th} size, the N^{th} size is smaller than an (N-1)^{th} size, and the (N-1)^{th} size is smaller than an (N-2)^{th} size. A fused feature corresponding to the image of the 1^{st} size is a feature obtained by correspondingly adding a feature of the image of the 1^{st} size to an upsampled feature of an image of a 2^{nd} size. A fused feature corresponding to an image of the (N-1)^{th} size is a feature obtained by correspondingly adding a feature of the image of the (N-1)^{th} size, a first feature, and a second feature. The first feature is a feature obtained by performing downsampling on a feature of an image of the (N-2)^{th} size, the second feature is a feature obtained by performing upsampling on a feature of an image of the N^{th} size, and a dimension of the first feature is the same as a dimension of the feature of the image of the (N-1)^{th} size, and a dimension of the second feature is the same as the dimension of the feature of the image of the (N-1)^{th} size. A fused feature corresponding to the image of the N^{th} size is a feature obtained by correspondingly adding the feature of the image of the N^{th} size and a downsampled feature of the image of the (N-1)^{th} size. Refer to FIG. 7 that shows a case in which N is 3, and a sum operator is used for adding. The "correspondingly adding" herein refers to pixel-by-pixel addition.

Then, the computing device inputs the fused feature corresponding to the first image into the first flow model, to obtain an output of the first flow model, where the output of the first flow model is a predicted distribution corresponding to the first image. Herein, the first flow model does not need to perform fusion on the feature of the image.

Optionally, there are a plurality of manners for upsampling and downsampling on the feature of the image. This is not limited in embodiments of this application. For example, upsampling may be performed through interpolation, and downsampling may be performed through convolution.

In another optional manner, when N is greater than 1, predicted distributions corresponding to images are generated as follows:
The computing device generates the predicted distributions of the N images based on the N images and the first flow model. For example, the first flow model has a capability of extracting features of images. The computing device inputs the N images separately into the first flow model, and outputs of the first flow model are the predicted distributions of the N images.

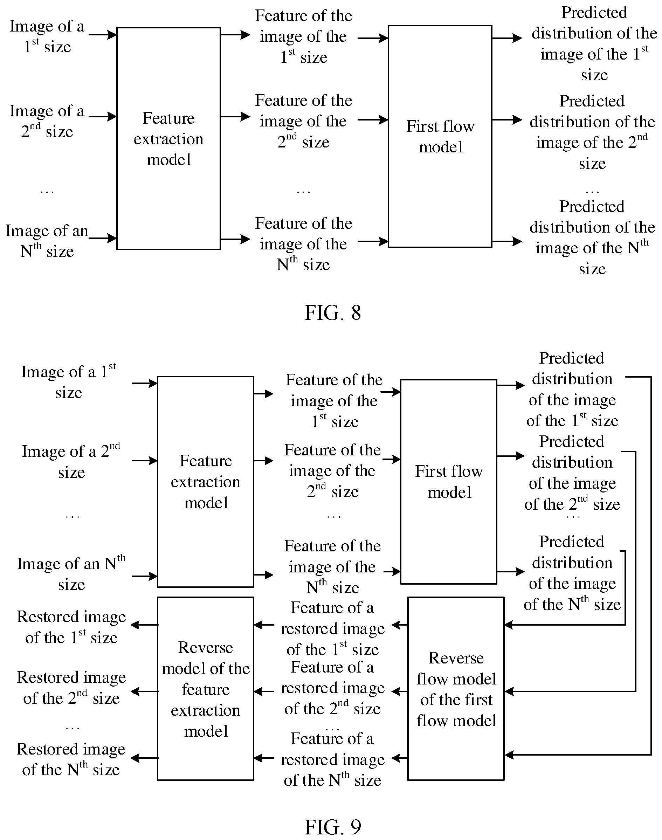

For another example, refer to FIG. 8. The computing device inputs the N images separately into a feature extraction model, to obtain the features of the N images. The feature extraction model may be a deep convolutional network trained in advance, and the extracted features are two-dimensional embedded information. When N is greater than 1, there may be one feature extraction model for sequentially extracting the features of the N images, or there may be N feature extraction models for concurrently extracting the features of the N images.

The computing device inputs the features of the N images into the first flow model, to generate the predicted distributions corresponding to the N images.

Optionally, in the first flow model, the feature of the first image is further fused with the feature of the third image other than the first image in the N images, so that a feature of an image of each size includes a feature of an image of another size, so that the generated predicted distributions are more accurate. When fusion is performed, the third image may be an image with a size adjacent to the size of the first image.

Optionally, refer to FIG. 9. After the predicted distributions of the N images are obtained, the predicted distributions of the N images may be input into the reverse flow model of the first flow model, to obtain features of the N restored images, and the features of the N restored images are processed by using an inverse model of the feature extraction model, to obtain the N restored images.

Optionally, the first flow model may be an additively coupled convolutional neural network modified from a multi-layer convolutional neural network that originally performs transmission in a chain manner. The first flow model is obtained through training with a training objective of constraining a distribution of the positive sample image to the target distribution.

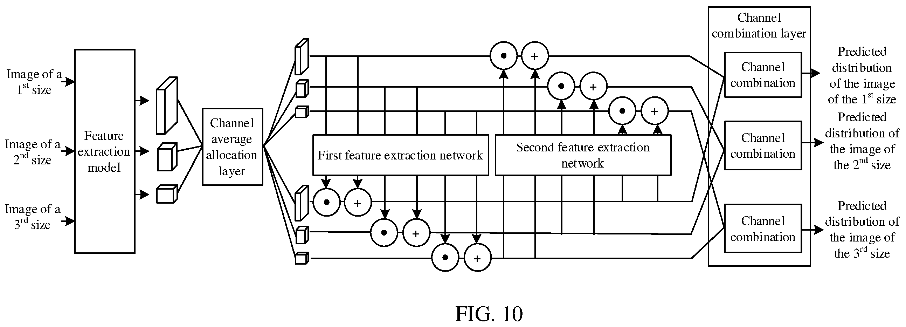

Refer to FIG. 10. The first flow model may include a channel average allocation layer, a first feature extraction network, a second feature extraction network, and a channel combination layer. The channel average allocation layer is configured to evenly divide a feature of each of the N images into two-channel features. The two-channel features have a same quantity of channels. Both the first feature extraction network and the second feature extraction network are formed by convolutional layers. The convolutional layer is configured to extract a feature of an image. A layer quantity of the convolutional layers is not limited in embodiments of this application.

For an image of a 1^{st} size in the N images, a feature of a 1^{st} channel of the image of the 1^{st} size is represented as A, and a feature of a 2^{nd} channel of the image of the 1^{st} size is represented as B. A is input into the first feature extraction network, and the first feature extraction network extracts a feature to obtain a first output. A first part of the first output is multiplied by B to obtain a first multiplication result, and a second part of the first output is added to the first multiplication result to obtain a first addition result. Compared with A, a quantity of channels of the first output is increased, both the first part and the second part of the first output are obtained by dividing the first output, a quantity of channels of the first part is the same as a quantity of channels of the feature of the 2^{nd} channel, and a quantity of channels of the second part is the same as the quantity of channels of the feature of the 2^{nd} channel. The first addition result is input into the second feature extraction network, and a feature is extracted by the second feature extraction network to obtain a second output. A first part of the second output is multiplied by A to obtain a second multiplication result, and a second part of the second output is added to the second multiplication result to obtain a second addition result. Compared with the first addition result, a quantity of channels of the second output increases, both the first part and the second part of the second output are obtained by dividing the second output, a quantity of channels of the first part is the same as a quantity of channels of the first addition result, and a quantity of channels of the second part is the same as the quantity of channels of the first addition result. The first addition result and the second addition result are sent to the channel combination layer for channel combination, to obtain a predicted distribution of the image of the 1^{st} size. FIG. 10 is a diagram of a framework for determining predicted distributions of images of three sizes. At the channel combination layer, channel combination may be concurrently performed to save time.

The foregoing is merely an example of the first flow model. An architecture of the first flow model is not limited in embodiments of this application.

It should be noted that, the first part and the second part of the first output may be considered as features obtained through feature extraction on A by two convolutional networks, and quantities of channels in features output by the two convolutional networks are the same. The first part and the second part of the second output may be considered as features obtained through feature extraction on the first addition result by two convolutional networks, and quantities of channels in features output by the two convolutional networks are the same.

Optionally, when fusion is to be performed on features of images of different sizes, the first feature extraction network and the second feature extraction network are further responsible for fusing the features. In this case, both the first feature extraction network and the second feature extraction network are formed by a fusion layer and a convolutional layer, the fusion layer is used for fusing features of a plurality of images, and the convolutional layer is used for extracting fused features. The first output is an output corresponding to a feature obtained by fusing A and a feature of a 1^{st} channel of at least one another image, the second output is a corresponding output obtained by fusing the first addition result with at least one another addition result, and the at least one another addition result is an addition result obtained from features output by the first feature extraction network. For example, it is assumed that the image of the 1^{st} size is the first image. After the fusion layer fuses the feature of the 1^{st} channel in features of the first image with a feature of a 1^{st} channel in the third image, the fused feature corresponding to the first image is obtained. The convolutional layer extracts the fused feature of the first image to obtain the first output.

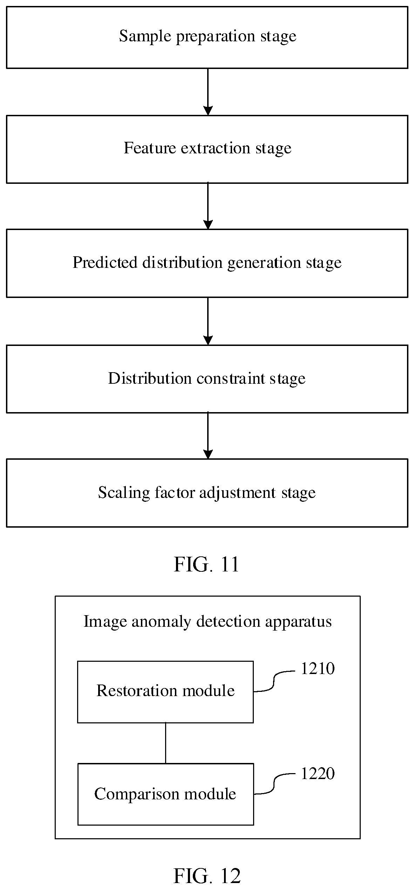

In an optional manner, a manner of obtaining the first flow model through training is as follows:
Training of the first flow model may be divided into a sample preparation stage, a feature extraction stage, a predicted distribution generation stage, a distribution constraint stage, and a scaling factor adjustment stage, as shown in FIG. 11.

In the sample preparation stage, at least one positive sample image is obtained, where the positive sample image is an image of a defect-free sample, and each positive sample image is scaled by using initial scaling factors (where the initial scaling factor is less than 1), to obtain positive sample images that are of M sizes and that correspond to each positive sample image, where a quantity of the initial scaling factors is equal to a quantity of the M sizes. A quantity of the at least one positive sample image is usually small. For example, the quantity is less than or equal to 10. For any positive sample image, positive sample images of (M+1) sizes may be obtained.

In the feature extraction stage, a target positive sample image is first used for training, and the positive sample images that are of the (M+1) sizes and that correspond to the target positive sample image are separately input into a feature extraction model to perform feature extraction, to obtain features of the images of the (M+1) sizes. The features are two-dimensional embedded information.

In the predicted distribution generation stage, an initial flow model is obtained, where an architecture of the initial flow model is the same as an architecture of the first flow model. The features of the images of the (M+1) sizes are input into the initial flow model, and outputs of the initial flow model are target predicted distributions of the images of the (M+1) sizes. When the initial flow model uses the features of the images of the (M+1) sizes to obtain the target predicted distributions of the images of the (M+1) sizes, feature fusion is also performed. For example, it is assumed that sizes gradually decrease from a 1^{st} size to an (M+1)^{th} size. When fusion is performed on features of images of the 1^{st} size, features of images of a 2^{nd} size are upsampled to be of a same magnitude as the features of the images of the 1^{st} size, and upsampled features of the images of the 2^{nd} size and the features of the images of the 1^{st} size are separately added pixel by pixel, to obtain fused features of the images of the 1^{st} size. When fusion is performed on the features of the images of the 2^{nd} size, the features of the images of the 1^{st} size are downsampled to be of a same magnitude as the features of the images of the 2^{nd} size, features of images of a 3^{rd} size are upsampled to be of a same magnitude as the features of the images of the 2^{nd} size, and downsampled features of the images of the 1^{st} size, upsampled features of the images of the 3^{rd} size, and the features of the images of the 2^{nd} size are added pixel by pixel, to obtain fused features of the images of the 2^{nd} size. By analogy, fused features of images of an M^{th} size are obtained by adding, pixel by pixel, downsampled features of images of an (M-1)^{th} size, upsampled features of images of the (M+1)^{th} size, and features of the images of the M^{th} size.

In the distribution constraint stage, parameters in the initial flow model are updated with an objective of constraining the target predicted distributions of the images of the (M+1) sizes to target distributions corresponding to the (M+1) sizes. Specifically, parameters in the first feature extraction network and the second feature extraction network in the initial flow model are updated, and the target distribution is an assumed distribution followed by the positive sample image. In the distribution constraint stage, a used constraint function may be a function for similarity calculation such as a mean square error function. For a target size in the (M+1) sizes, the constraint function is used for calculating a similarity between a target predicted distribution of an image of the target size and a target distribution corresponding to the target size. In this way, for the (M+1) sizes, (M+1) similarities can be obtained. It is determined whether all the (M+1) similarities are greater than a first threshold. If not all the (M+1) similarities are greater than the first threshold, the parameters in the initial flow model are updated, returning to the sample preparation stage is performed, and an updated flow model continues to be trained by using a next positive sample image, until the (M+1) similarities are all greater than the first threshold, indicating that flow model training is completed.

In the scaling factor adjustment stage, when a flow model that can constrain the target predicted distributions of the images of the (M+1) sizes to the target distributions is obtained, the target predicted distributions of the images of the (M+1) sizes are input into a reverse flow model (where the reverse flow model is a model that restores the predicted distributions back to features of images) to obtain features of restored images of the (M+1) sizes, and the restored images of the (M+1) sizes are generated by using the features of the restored images of the (M+1) sizes. Similarity calculation is performed on original images and restored images of same sizes in the (M+1) sizes to obtain (M+1) similarities. If all the (M+1) similarities are greater than a second threshold, it is determined that scaling factors do not need to be adjusted. If at least one of the (M+1) similarities is less than or equal to a second threshold, K scaling factors are added, where K is greater than or equal to 1, and a value of K may be set based on actual requirements, returning to the sample preparation stage is performed, a flow model for constraining target predicted distributions of images of (M+1+K) sizes to target distributions continues to be updated, and after the flow model for constraining the target predicted distributions of the images of the (M+1+K) sizes to the target distributions is obtained again, the scaling factor stage is entered again to determine whether the scaling factors need to be adjusted. When it is determined that the scaling factors do not need to be adjusted, the current flow model is determined as the first flow model, and a current reverse flow model is determined as the second flow model.

When the similarity calculation is performed on the original images and the restored images of the same sizes in the (M+1) sizes, pixel distances are calculated pixel by pixel for an original image and a restored image of size 1, and a mean of all the pixel distances is determined as a similarity corresponding to size 1. The pixel distance is a Euclidean distance, a Manhattan distance, or the like.

Optionally, values of the K scaling factors may be set based on actual requirements. When a coarse-grained feature needs to be learned, the values of the K scaling factors are greater than 1 and greater than a maximum value of initial scaling factors. When a fine-grained feature needs to be learned, the values of the K scaling factors are less than 1 and less than a minimum value of initial scaling factors.

Optionally, in the sample preparation stage, before the positive sample image is scaled, a mark may be added to any position in the positive sample image. The mark may be a mark of any shape. For example, the mark is a rectangular box mark or an annular mark, and the mark is a primary reference for adjusting the scaling factor. In the scaling factor adjustment stage, similarity calculation is performed on marked areas of the original images and the restored images of the same sizes in the (M+1) sizes to obtain (M+1) similarities. If all the (M+1) similarities are greater than the second threshold, it is determined that the scaling factors do not need to be adjusted. If at least one of the (M+1) similarities is less than or equal to the second threshold, the K scaling factors are added, returning to the sample preparation stage is performed, the flow model for constraining the target predicted distributions of the images of the (M+1+K) sizes to the target distributions continues to be updated, and after the flow model for constraining the target predicted distributions of the images of the (M+1+K) sizes to the target distributions is obtained again, the scaling factor stage is entered again to determine whether the scaling factors need to be adjusted. When it is determined that the scaling factors do not need to be adjusted, the current flow model is determined as the first flow model, and the current reverse flow model is determined as the second flow model. In this way, using the marked areas to determine the similarities can reduce a calculation amount.

It should be noted that, when the initial scaling factors are not updated, a quantity of images obtained by scaling the to-be-detected image is equal to M. Scaling factor updating is an optional process, and there may be no scaling factor adjustment stage.

In this embodiment of this application, there are scaling factors that can be used to scale one positive sample image to obtain positive sample images of a plurality of sizes. This can reduce a quantity of positive sample images used during training, so that a training objective can be achieved by using a small quantity of positive sample images.

In addition, during the training, the scaling factors are further updated, so that anomaly detection at different granularities can be adapted, to improve anomaly detection precision.

The following describes an image anomaly detection apparatus provided in an embodiment of this application.

FIG. 12 is a diagram of a structure of an image anomaly detection apparatus according to an embodiment of this application. The apparatus may be implemented as a part of the apparatus or an entire apparatus by using software, hardware, or a combination thereof. The apparatus provided in this embodiment of this application may implement the procedure in FIG. 4 in embodiments of this application. The apparatus includes a restoration module 1210 and a comparison module 1220.

The restoration module 1210 is configured to restore predicted distributions of N images to obtain N restored images, where the N images include a to-be-detected image and/or an image obtained by scaling the to-be-detected image, a restored image corresponding to a first image in the N images has a same size as the first image, and N is a positive integer, and specifically configured to implement a restoration function of step 401 and perform an implicit step included in step 401.

The comparison module 1220 is configured to obtain an abnormal pixel of the to-be-detected image based on N comparison results of the N restored images and N second images, where the N restored images are in one-to-one correspondence with the N second images, sizes of the N restored images are the same as sizes of the corresponding second images, the second image is an image obtained by restoring a target distribution, and the target distribution is a distribution followed by a positive sample image in a domain to which the to-be-detected image belongs, and specifically configured to implement a comparison function of step 402 and perform an implicit step included in step 402.

In an optional manner, the restoration module 1210 is further configured to generate the predicted distributions of the N images based on the N images and a first flow model.

In an optional manner, the restoration module 1210 is further configured to:
extract features of the N images; and
input the features of the N images into the first flow model, to generate the predicted distributions of the N images.

In an optional manner, N is a positive integer greater than 1, and a predicted distribution of the first image is generated by the first flow model based on a fused feature corresponding to the first image, where
the fused feature corresponding to the first image is obtained by fusing a feature of the first image and a feature of at least one image other than the first image in the N images.

In an optional manner, N is a positive integer greater than 1, and the restoration module 1210 is further configured to:
for the first image in the N images, fuse the first image and at least one image other than the first image in the N images, to obtain a fused image corresponding to the first image; and
generate a predicted distribution of the first image based on the fused image.

In an optional manner, the restoration module 1210 is configured to input the predicted distributions of the N images into a second flow model to obtain the N restored images, where the second flow model is a reverse flow model.

In an optional manner, the comparison module 1220 is configured to:
determine pixel distances between corresponding pixels of the N restored images and the N second images;
determine, based on the pixel distances, anomaly scores corresponding to pixels of the to-be-detected image; and
determine a pixel whose anomaly score is greater than a target mean in the to-be-detected image as the abnormal pixel of the to-be-detected image, where the target mean is a mean of the anomaly scores corresponding to the pixels of the to-be-detected image.

In an optional manner, the first flow model is obtained through training with a training objective of constraining a distribution of at least one positive sample image to the target distribution.

In an optional manner, the apparatus further includes a training module, configured to:
scale a target positive sample image in the at least one positive sample image, to obtain positive sample images of M sizes of the target positive sample image, and extract features of the positive sample images of the M sizes and a feature of the target positive sample image, where M is a positive integer;
input the features of the positive sample images of the M sizes and the feature of the target positive sample image into an initial flow model, to obtain a predicted distribution of a positive sample image of each size; and
update the initial flow model with an objective of constraining the predicted distribution of the positive sample image of each size to the target distribution, until the first flow model is obtained.

For a detailed process in which the image anomaly detection apparatus shown in FIG. 12 performs image anomaly detection, refer to the descriptions in the foregoing embodiments. Details are not described herein again. The image anomaly detection apparatus shown in FIG. 12 may be the device 300 in FIG. 3.

In an example, an embodiment of this application provides a computer program product. The computer program product includes computer instructions, and the computer instructions are stored in a computer-readable storage medium. A processor of a computer device reads the computer instructions from the computer-readable storage medium, and the processor executes the computer instructions, so that the computer device performs the procedure shown in FIG. 4.

A person of ordinary skill in the art may be aware that, in combination with the examples described in embodiments disclosed in this application, method steps and units may be implemented by using electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

In several embodiments provided in this application, it should be understood that the disclosed system architectures, apparatus, and method may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, modules in embodiments of this application may be integrated into one processing module, or each of the modules may exist alone physically, or two or more modules may be integrated into one module. The integrated module may be implemented in a form of hardware, or may be implemented in a form of a software module.

If the integrated module is implemented in a form of a software functional module and sold or used as an independent product, the integrated module may be stored in a computer-readable storage medium. Based on this understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

In this application, terms such as "first" and "second" are used to distinguish between same items or similar items that have basically same purposes or functions. It should be understood that there is no logical or time sequence dependency between "first" and "second", and a quantity and an execution sequence are not limited. It should be further understood that, although the terms such as "first" and "second" are used to describe the elements in the following description, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

A term "at least one" in this application means one or more, and a term "a plurality of" in this application means two or more.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An image anomaly detection method, wherein the method comprises:
restoring predicted distributions of N images to obtain N restored images, wherein the N images comprise a to-be-detected image and/or an image obtained by scaling the to-be-detected image, a restored image corresponding to a first image in the N images has a same size as the first image, and N is a positive integer; and
obtaining an abnormal pixel of the to-be-detected image based on N comparison results of the N restored images and N second images, wherein the N restored images are in one-to-one correspondence with the N second images, sizes of the N restored images are the same as sizes of the corresponding second images, the second image is an image obtained by restoring a target distribution, and the target distribution is a distribution followed by a positive sample image in a domain to which the to-be-detected image belongs.

2. The method according to claim 1, wherein the method further comprises:
generating the predicted distributions of the N images based on the N images and a first flow model.

3. The method according to claim 2, wherein the generating the predicted distributions of the N images based on the N images and a first flow model comprises:
extracting features of the N images; and
inputting the features of the N images into the first flow model, to generate the predicted distributions of the N images.

4. The method according to claim 3, wherein N is a positive integer greater than 1, and a predicted distribution of the first image is generated by the first flow model based on a fused feature corresponding to the first image, wherein
the fused feature corresponding to the first image is obtained by fusing a feature of the first image and a feature of at least one image other than the first image in the N images.

5. The method according to claim 1, wherein N is a positive integer greater than 1, and the method further comprises:
for the first image in the N images, fusing the first image and at least one image other than the first image in the N images, to obtain a fused image corresponding to the first image; and
generating a predicted distribution of the first image based on the fused image.

6. The method according to any one of claims 1 to 5, wherein the restoring predicted distributions of N images to obtain N restored images comprises:
inputting the predicted distributions of the N images into a second flow model to obtain the N restored images, wherein the second flow model is a reverse flow model.

7. The method according to any one of claims 1 to 6, wherein the obtaining an abnormal pixel of the to-be-detected image based on N comparison results of the N restored images and N second images comprises:
determining pixel distances between corresponding pixels of the N restored images and the N second images;
determining, based on the pixel distances, anomaly scores corresponding to pixels of the to-be-detected image; and
determining a pixel whose anomaly score is greater than a target mean in the to-be-detected image as the abnormal pixel of the to-be-detected image, wherein the target mean is a mean of the anomaly scores corresponding to the pixels of the to-be-detected image.

8. The method according to any one of claims 1 to 7, wherein a size of the image obtained by scaling the to-be-detected image is smaller than a size of the to-be-detected image.

9. The method according to any one of claims 2 to 4, wherein the first flow model is obtained through training with a training objective of constraining a distribution of at least one positive sample image to the target distribution.

10. The method according to claim 9, wherein the method further comprises:
scaling a target positive sample image in the at least one positive sample image, to obtain positive sample images of M sizes of the target positive sample image, and extracting features of the positive sample images of the M sizes and a feature of the target positive sample image, wherein M is a positive integer;
inputting the features of the positive sample images of the M sizes and the feature of the target positive sample image into an initial flow model, to obtain a predicted distribution of a positive sample image of each size; and
updating the initial flow model with an objective of constraining the predicted distribution of the positive sample image of each size to the target distribution, until the first flow model is obtained.

11. An image anomaly detection apparatus, wherein the apparatus comprises:
a restoration module, configured to restore predicted distributions of N images to obtain N restored images, wherein the N images comprise a to-be-detected image and/or an image obtained by scaling the to-be-detected image, a restored image corresponding to a first image in the N images has a same size as the first image, and N is a positive integer; and
a comparison module, configured to obtain an abnormal pixel of the to-be-detected image based on N comparison results of the N restored images and N second images, wherein the N restored images are in one-to-one correspondence with the N second images, sizes of the N restored images are the same as sizes of the corresponding second images, the second image is an image obtained by restoring a target distribution, and the target distribution is a distribution followed by a positive sample image in a domain to which the to-be-detected image belongs.

12. The apparatus according to claim 11, wherein the restoration module is further configured to generate the predicted distributions of the N images based on the N images and a first flow model.

13. The apparatus according to claim 12, wherein the restoration module is further configured to:
extract features of the N images; and
input the features of the N images into the first flow model, to generate the predicted distributions of the N images.

14. The apparatus according to claim 13, wherein N is a positive integer greater than 1, and a predicted distribution of the first image is generated by the first flow model based on a fused feature corresponding to the first image, wherein
the fused feature corresponding to the first image is obtained by fusing a feature of the first image and a feature of at least one image other than the first image in the N images.

15. The apparatus according to claim 11, wherein N is a positive integer greater than 1, and the restoration module is further configured to:
for the first image in the N images, fuse the first image and at least one image other than the first image in the N images, to obtain a fused image corresponding to the first image; and
generate a predicted distribution of the first image based on the fused image.

16. The apparatus according to any one of claims 11 to 15, wherein the restoration module is configured to input the predicted distributions of the N images into a second flow model to obtain the N restored images, wherein the second flow model is a reverse flow model.

17. The apparatus according to any one of claims 11 to 16, wherein the comparison module is configured to:
determine pixel distances between corresponding pixels of the N restored images and the N second images;
determine, based on the pixel distances, anomaly scores corresponding to pixels of the to-be-detected image; and
determine a pixel whose anomaly score is greater than a target mean in the to-be-detected image as the abnormal pixel of the to-be-detected image, wherein the target mean is a mean of the anomaly scores corresponding to the pixels of the to-be-detected image.

18. The apparatus according to any one of claims 12 to 14, wherein the first flow model is obtained through training with a training objective of constraining a distribution of at least one positive sample image to the target distribution.

19. The apparatus according to claim 18, wherein the apparatus further comprises a training module, configured to:
scale a target positive sample image in the at least one positive sample image, to obtain positive sample images of M sizes of the target positive sample image, and extract features of the positive sample images of the M sizes and a feature of the target positive sample image, wherein M is a positive integer;
input the features of the positive sample images of the M sizes and the feature of the target positive sample image into an initial flow model, to obtain a predicted distribution of a positive sample image of each size; and
update the initial flow model with an objective of constraining the predicted distribution of the positive sample image of each size to the target distribution, until the first flow model is obtained.

20. A computing device, wherein the computing device comprises a memory and a processor;
the memory stores computer instructions; and
the processor is configured to execute the computer instructions, to enable the computing device to perform the method according to any one of claims 1 to 10.

21. A computer-readable storage medium, wherein the storage medium stores at least one computer instruction; and
the computer instruction is read by a processor, to enable a computing device to perform the method according to any one of claims 1 to 10.
